(19)

Europäisches
Patentamt
European
Patent Office
Office européen
des brevets

(11) **EP 2 514 955 B1**

(12) **EUROPEAN PATENT SPECIFICATION**

(45) Date of publication and mention
of the grant of the patent:
**26.11.2014 Bulletin 2014/48**

(51) Int Cl.:
*F02D 41/14* (2006.01)    *G01N 27/419* (2006.01)
*F01N 11/00* (2006.01)

(21) Application number: **12165069.1**

(22) Date of filing: **20.04.2012**

(54) **Method for updating a function for calculating the exhaust pressure of an internal combustion engine**

Verfahren zum Aktualisieren einer Berechnungsfunktion des Abgasstromdruckes einer Brennkraftmaschine

Procédé d'actualisation d'une fonction de calcul de la pression du gaz d'échappement dans un moteur à combustion interne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2011 IT BO20110213**

(43) Date of publication of application:
**24.10.2012 Bulletin 2012/43**

(73) Proprietor: **Magneti Marelli S.p.A.
Corbetta (MI) (IT)**

(72) Inventors:
• **Stola, Federico
40138 BOLOGNA (IT)**
• **De Cesare, Matteo
71017 TORREMAGGIORE (IT)**

(74) Representative: **Bergadano, Mirko et al
Studio Torta S.p.A.
Via Viotti, 9
10121 Torino (IT)**

(56) References cited:
**WO-A1-2010/058461     DE-A1-102005 000 204
JP-A- 2009 270 543**

EP 2 514 955 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a method of updating a pressure law providing the exhaust pressure as a function of the exhaust gas flow rate in an internal combustion engine.

PRIOR ART

At least one UEGO sensor (i.e. a linear oxygen sensor), which measures the percentage of oxygen present in the exhaust gases for the purpose of accurately determining the mixture ratio (or lambda ratio), is normally present in an exhaust duct of modern internal combustion engines. In diesel engines complying with the emission standard referred to as "EURO5", there is only one UEGO sensor arranged upstream of the catalyzer, while in petrol engines complying with the emission standard referred to as "EURO5", there are either two lambda sensors of the ON/OFF type arranged upstream and downstream of the catalyzer, or a UEGO sensor and a lambda sensor of the ON/OFF type arranged upstream and downstream of the catalyzer, respectively. The measurement of the percentage of oxygen provided by a UEGO sensor is greatly influenced by the exhaust pressure (i.e. the pressure of the exhaust gases present in the exhaust duct) and thus the measurement provided by the UEGO sensor must be corrected (compensated) by means of a correction (compensation), which is a function of the exhaust pressure in order to obtain an accurate measurement of the oxygen percentage present in the exhaust gases. It is thus apparent that the exhaust pressure must be known in order to use the UEGO sensor.

In standard engines, directly measuring the exhaust pressure by means of a specific pressure sensor is difficult and costly due to the high temperatures of the exhaust gases, which impose the use of particularly resistant, and thus very costly, sensors; for this reason, a pressure law (experimentally determined) is currently used in standard engines, which law provides the exhaust pressure as a function of the exhaust gas flow rate (the exhaust gas flow rate is, in turn, estimated by adding the flow rate of the air taken in by the cylinders and the flow rate of the injected fuel, that latter being multiplied by a scale factor).

However, the exhaust pressure estimation currently provided by the pressure law is not very accurate under all operating conditions, and is especially negatively affected by constructional deviations and time drifts.

DESCRIPTION OF THE INVENTION

It is the object of the present invention to provide a method of updating a pressure law providing the exhaust pressure as a function of the exhaust gas flow rate in an internal combustion engine, which method is free from the above-described drawbacks and, in particular, is free and cost-effective to be implemented.

A method of updating a pressure law providing the exhaust pressure as a function of the exhaust gas flow rate in an internal combustion engine according to the present invention is provided as claimed in the appended claims.

BRIEF DESCRIPTION OF THE DRAWINGS

The present invention will now be described with reference to the accompanying drawings, which show a non-limitative embodiment thereof, in which:

- figure 1 is a diagrammatic view of an internal combustion engine provided with an electronic control unit which implements the method of updating the pressure law object of the present invention;
- figure 2 is a chart which shows a constructional feature linking the percentage variation of the current delivered by two different types of UEGO sensors to the variation of absolute exhaust pressure;
- figure 3 is a chart which shows the pressure law linking the relative exhaust pressure to the exhaust gas flow rate;
- figure 4 is a chart which compares the actual exhaust pressure trend (measured directly) and the estimated exhaust pressure trend during a transient cycle under cut-off conditions over time; and
- figure 5 is a chart which compares the actual exhaust pressure trend (measured directly) and the estimated exhaust pressure trend over time under pure air and under stationary conditions with high pressure.

PREFERRED EMBODIMENTS OF THE INVENTION

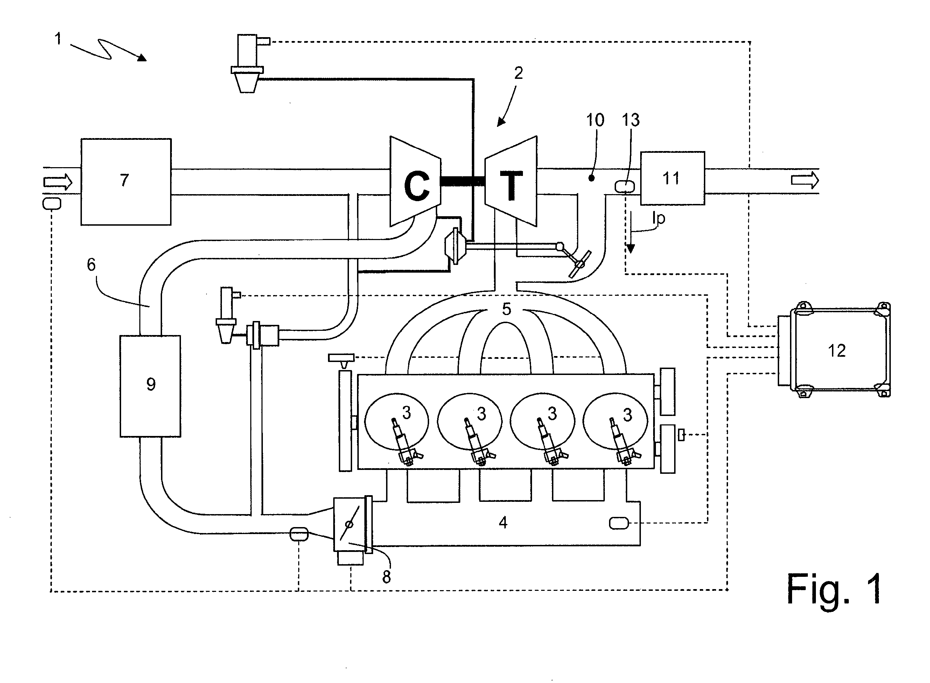

In figure 1, numeral 1 indicates as a whole an internal combustion engine supercharged by means of a turbocharger supercharging system.

The internal combustion engine 1 comprises four cylinders 3, each of which is connected to an intake manifold 4 by means of at least one respective intake valve (not shown) and to an exhaust manifold 5 by means of at least one respective exhaust valve (not shown). The intake manifold 4 receives fresh air (i.e. air coming from the external environment) through an intake pipe 6, which is provided with an air cleaner 7 and is regulated by a butterfly valve 8. An intercooler 9 for cooling the intake air is arranged along the intake pipe 6. An exhaust duct 10, which feeds the exhaust gases produced by the combustion to an exhaust system, is connected to the exhaust manifold 5, which exhaust duct emits the gases produced by the combustion into the atmosphere and normally comprises at least one catalyzer 11 and at least one silencer (not shown) arranged downstream of the catalyzer 11.

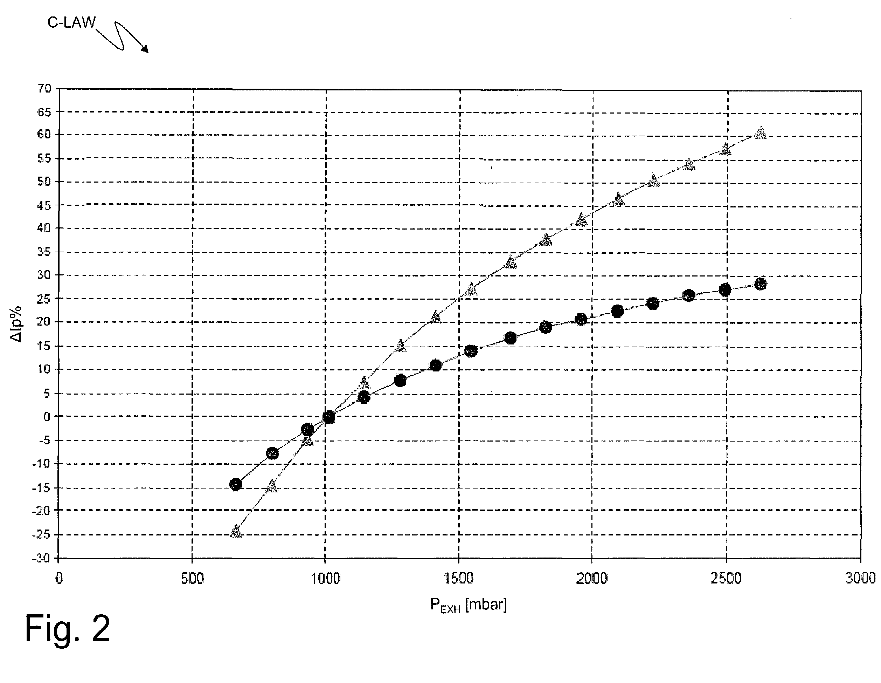

The internal combustion engine 1 is controlled by an electronic control unit 12, which governs the operation of all the components of the internal combustion engine 1. Among other things, the electronic control unit 12 is connected to a UEGO sensor 13 (i.e. a linear oxygen sensor), which is inserted in the exhaust duct 10 upstream of the catalyzer 11, and measures the percentage of oxygen present in the exhaust gases in order to accurately determine the mixing ratio pressure (or lambda ratio). In particular, the UEGO sensor 13 outputs a current Ip, the intensity of which depends to greater extent on the oxygen percentage present in the exhaust gases and to a lesser extent on the exhaust pressure $P_{EXH}$; figure 2 depicts a chart which shows a constructional feature C-LAW linking the variation of the current percentage Ip delivered by two different UEGO sensor types 13 as a function of the variation of exhaust pressure $P_{EXH}$ (absolute).

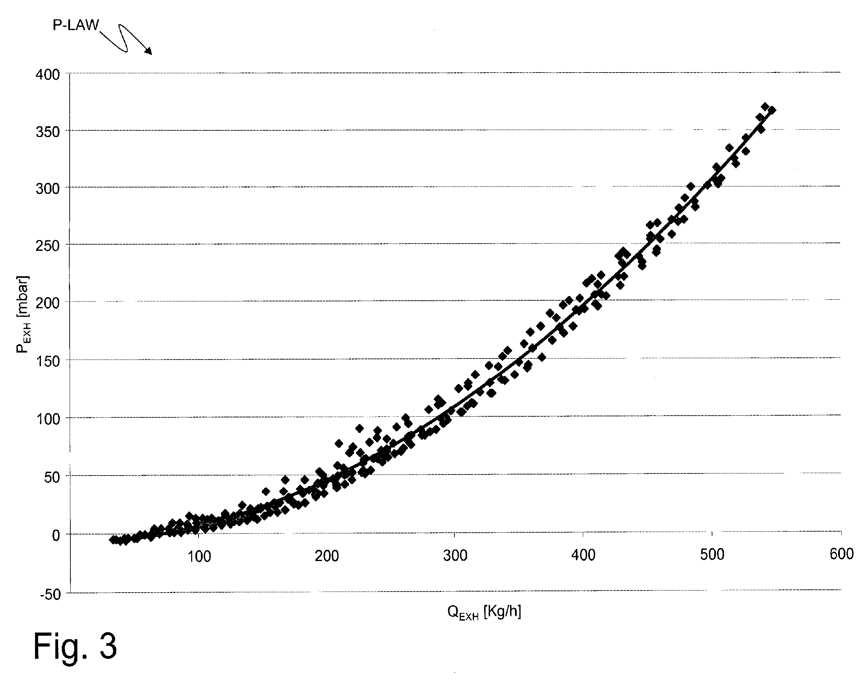

A pressure law P-LAW (shown in figure 3) which provides the exhaust pressure $P_{EXH}$ as a function of the exhaust gas flow rate $Q_{EXH}$ is stored in a memory of the electronic control unit 12. The pressure law P-LAW is normally used by the electronic control unit 12 to determine the exhaust pressure $P_{EXH}$, which is, in turn, used to determine a correction (compensation) to be applied to the measurement provided by the UEGO sensor 13 using the constructional feature C-LAW of the UEGO sensor 13. A nominal pressure law P-LAW, which may have even significant deviations with respect to the actual pressure law P-LAW (essentially by effect of constructional deviations and time drifts), is stored in memory of the electronic control unit 12 during the construction of the internal combustion engine 1. Consequently, the electronic control unit 12 implements a method of updating a pressure law P-LAW which will be described in detail below and has the purpose of updating (adapting) the pressure law P-LAW stored in the electronic control unit 12 to take the constructional dispersions and time drifts of the internal combustion engine 1 into account.

The electronic control unit 12 measures and stores a first current intensity $Ip_1$ of the UEGO sensor 13 arranged along the exhaust duct 10 whenever the exhaust duct 10 (i.e. the UEGO sensor 13) is under conditions of pure air and at an exhaust pressure $P_{EXH}$ equal to a reference pressure (normally equal to atmospheric pressure). Generally, the electronic control unit 12 assumes that the UEGO sensor 13 is at an exhaust pressure $P_{EXH}$ equal to the reference pressure (i.e. to atmospheric pressure) when the internal combustion engine 1 has a number of revolutions per minute close to the minimum number of revolutions per minute (e.g. when the difference between the current number of revolutions per minute and the idling number of revolutions per minute is lower than a running threshold value). Furthermore, the electronic control unit 12 generally assumes that the exhaust duct 10 (i.e. the UEGO sensor 13) is under conditions of pure air when the internal combustion engine 1 is under cut-off conditions (i.e. in the complete absence of fuel injection) for a given interval of time (i.e. an interval of time higher than a time threshold value).

According to a different approach, the electronic control unit 12 assumes that the UEGO sensor 13 is at an exhaust pressure $P_{EXH}$ equal to reference pressure (i.e. to atmospheric pressure) and under conditions of pure air when the internal combustion engine 1 is off; in all cases, such an approach is certainly valid when the internal combustion engine 1 has been off for some time (i.e. for several hours), while it may not be valid when the internal combustion engine 1 has just been stopped because combustion residues may easily remain inside the exhaust duct 10 immediately after stopping.

The electronic control unit 12 measures and stores a current intensity $Ip_2$ of the UEGO sensor 13 whenever the exhaust duct 10 (i.e. the UEGO sensor 13) is under conditions of pure air and at an exhaust pressure $P_{EXH}$ different from (higher than) the reference pressure (i.e. atmospheric pressure). As previously mentioned, the electronic control unit 12 assumes that the exhaust duct 10 (i.e. the UEGO sensor 13) is under conditions of pure air when the internal combustion engine 1 remains in cut-off conditions for a given interval of time. Furthermore, the electronic control unit 12 assumes that the UEGO sensor 10 is at an exhaust pressure $P_{EXH}$ different from (higher than) reference pressure when the internal combustion engine 1 has a number of revolutions per minute which is close to the minimum number of revolutions per minute (e.g. when the difference between the current number of revolutions per minute and the idling number of revolutions per minute is higher than a threshold value).

Furthermore, the electronic control unit 12 estimates the exhaust gas flow rate $Q_{EXH}$ at the moment of measuring the second current intensity $Ip_2$ of the UEGO sensor 13. The exhaust gas flow rate $Q_{EXH}$ (i.e. of the gas flow rate crossing the exhaust duct 10) is estimated by the electronic control unit 12 by adding the flow rate of the air $Q_{INT}$ taken in by the cylinders 3 and the flow rate of the injected fuel $Q_{FUEL}$ multiplied by a scale factor (which is a non-dimensional coefficient for the conversion of the unit of measurements, and, for example, in the case in which diesel fuel is approximately 14). It is worth noting that the flow rate of the air $Q_{INT}$ taken in by the cylinders 3 and the flow rate of the injected fuel $Q_{FUEL}$ are normally already available in the electronic control unit 12 because they are two fundamental parameters of the engine control. By way of example, the electronic control unit 12 estimates the injected fuel rate $Q_{FUEL}$ on the basis of the injection actuation, and estimates the flow rate of air $Q_{INT}$ taken in by the cylinders 3 of the internal combustion engine 1 either by using the measurements of a flow meter arranged in the intake manifold 4 or by using the speed-density law which is well known in literature.

Subsequently, the electronic control unit 12 determines the current difference $\Delta Ip$ by subtracting the second current intensity $Ip_2$ of the UEGO sensor 13 from the first current intensity $Ip_1$ of the UEGO sensor 13; as shown in figure 2, the intensity of the current Ip of the UEGO sensor 13 increases as the exhaust pressure $P_{EXH}$ increases, and thus the second current intensity $Ip_2$ is higher than the first current intensity $Ip_1$ because the second current intensity $Ip_2$ of the UEGO sensor 13 is measured when the exhaust duct 10 (i.e. the UEGO sensor 13) is at an exhaust pressure $P_{EXH}$ higher than the reference pressure (i.e. than atmospheric pressure) at which the first current intensity $Ip_1$ is measured.

Finally, the electronic control unit 12 determines an exhaust pressure $P_{EXH}$ corresponding to the current difference $\Delta Ip$ by using a constructional feature C-LAW of the UEGO sensor 13, which links the exhaust pressure $P_{EXH}$ to the current difference $\Delta Ip$.

At this point, the electronic control unit 12 may use the exhaust pressure $P_{EXH}$ corresponding to the current difference $\Delta Ip$ and the exhaust gas flow rate $Q_{EXH}$ at the moment of measuring the second current intensity $Ip_2$ of the UEGO sensor 13 in order to update the pressure law P-LAW. In other words, the exhaust pressure $P_{EXH}$ corresponding to the current difference $\Delta Ip$ and the exhaust gas flow rate $Q_{EXH}$ at the moment of measurement of the second current intensity $Ip_2$ of the UEGO sensor 13 are an experimental point on the plane defined by the exhaust gas flow rate $Q_{EXH}$ and by the exhaust pressure $P_{EXH}$, and such an experimental point may be used to update the pressure law P-LAW (i. e. to "deform" the pressure law P-LAW so that the pressure law P-LAW passes through, or at least near, the experimental point).

According to a preferred embodiment, the electronic control unit 12 does not update the pressure law P-LAW as soon as only one experimental point is available, but waits to have a significant given number (several tens) of experimental points before actually updating the pressure law P-LAW; thereby, reducing the accidental error on the experimental point determination is possible. Figure 3 shows a plurality of experimental points which are approximated by a curve which represents the pressure law P-LAW.

According to a preferred embodiment, the pressure law P-LAW is a polynomial law. In the example shown in figure 3, the pressure law P-LAW is expressed by the following polynomial equation:

$$P_{EXH} = a \cdot M_{EXH}^2 + b \cdot M_{EXH} + c$$

$P_{EXH}$  exhaust pressure;

$M_{EXH}$  exhaust gas flow rate;

a,b,c fixed numeric coefficients of the polynomial function (which are modified when the pressure law P-LAW is updated as a function of the experimental points).

According to a possible embodiment, the electronic control unit 12 determines an exhaust pressure deviation $\Delta P_{EXH}$ by calculating the difference between the exhaust pressure $P_{EXH}$ corresponding to the current difference $\Delta Ip$ and the exhaust pressure $P_{EXH}$ provided by the pressure law P-LAW at the exhaust gas flow rate $Q_{EXH}$ at the moment of measurement of the second current intensity $Ip_2$ of the UEGO sensor 13; furthermore, the electronic control unit 12 updates the pressure law P-LAW only if the absolute value of the exhaust pressure deviation $\Delta P_{EXH}$ is higher than a predetermined threshold (i.e. only the experimental measurement has determined a real situation significantly different from the situation modeled by the current pressure law P-LAW).

The above-described method of updating the pressure law P-LAW has many advantages.

Firstly, the above-described method of updating a pressure law P-LAW is simple and cost-effective to be implemented in an electronic control unit of an internal combustion engine because it only uses measurements provided by sensors which are always present in modern internal combustion engines (and thus no hardware change is needed) and requires neither high calculation capacity nor high memory capacity.

The above-described method of updating a pressure law P-LAW allows to effectively, efficiently and rapidly update the nominal pressure law P-LAW to take constructional deviations and time drifts into account (i.e. to compensate for constructional dispersions and to follow time drifts). Thereby, the estimate of the exhaust pressure $P_{EXH}$ is more accurate and thus the measurement of the UEGO sensor 13 (which is compensated as a function of the exhaust pressure

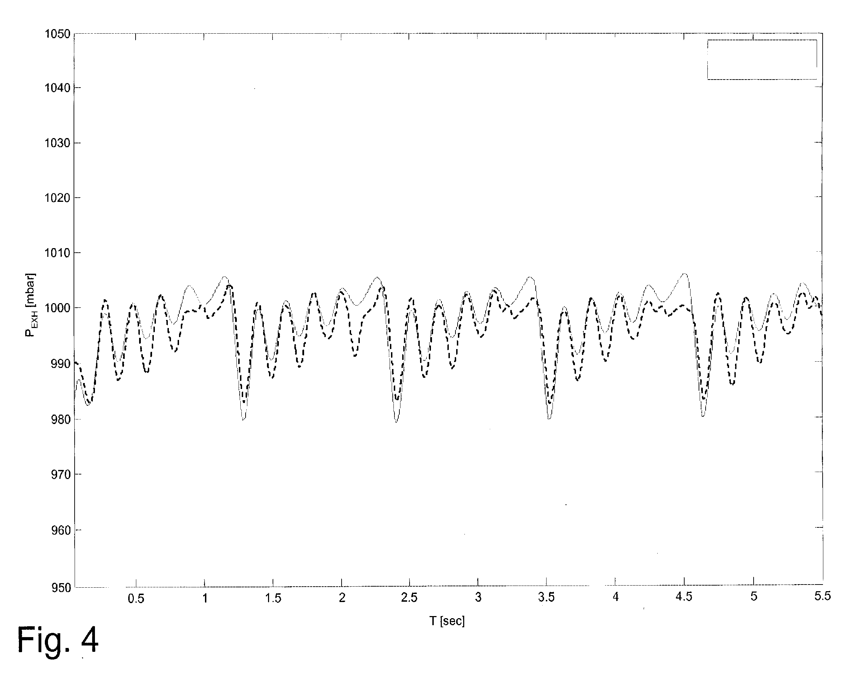

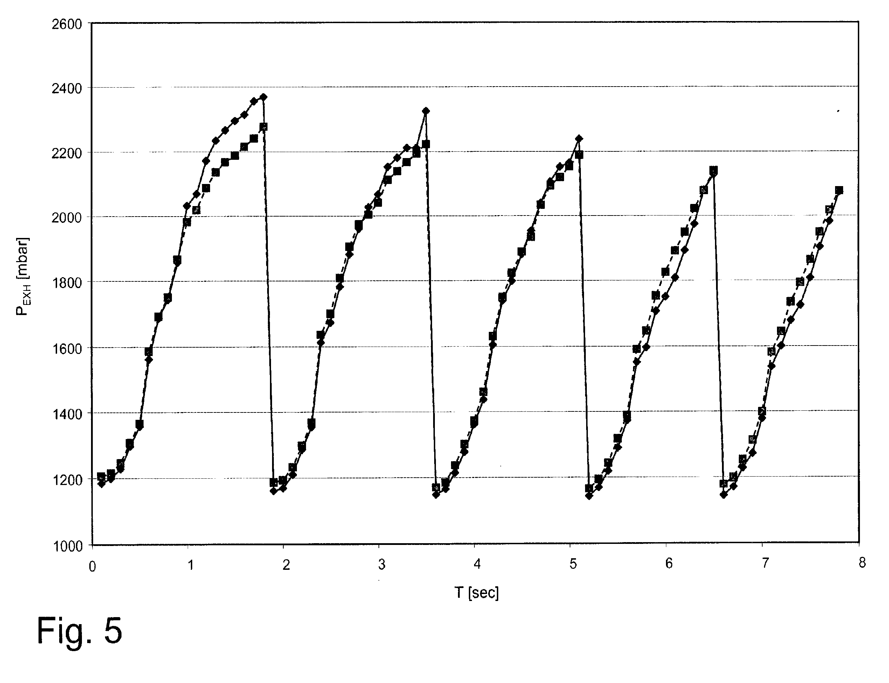

$P_{EXH}$) is also more accurate. It is worth noting in figures 4 and 5 that the exhaust pressure $P_{EXH}$ trend over time estimated by means of the updated pressure law P-LAW is entirely similar to the actual exhaust pressure $P_{EXH}$ trend over time (measured directly by means of a specific laboratory sensor). In particular, in figure 4, the actual exhaust pressure $P_{EXH}$ is shown with a solid line and the estimated exhaust pressure $P_{EXH}$ is shown by a dashed line; similarly, in figure 5, the actual exhaust pressure $P_{EXH}$ is shown by a solid line (and rhombus- shaped points) and the estimated exhaust pressure $P_{EXH}$ is shown by a dashed line (and square-shaped points). The increase of the accuracy in the measurement of the UEGO sensor 13 also allows to use a more reliable learning strategy of the amounts injected in small injections by a single injector during a cut-off, because such a learning strategy is completely based on the measurement of the air/petrol ratio supplied by the UEGO sensor 13.

By virtue of the above-described method of updating the pressure law P-LAW, the estimated exhaust pressure $P_{EXH}$ can always be known with high accuracy, and the estimated exhaust pressure $P_{EXH}$ can thus be used for further estimates. For example, the exhaust pressure $P_{EXH}$ downstream of the anti-particulate filter can also be simply calculated by subtracting the pressure drop imposed by the anti-particulate filter from the exhaust pressure estimate $P_{EXH}$ near the UEGO sensor 13, when an anti-particulate filter is present and arranged downstream of the UEGO sensor 13 and a differential upstream-downstream pressure sensor is provided (to diagnose the degree of obstruction of the anti-particulate filter, and thus decide the regeneration of the anti-particulate filter itself), knowing the estimated of the exhaust pressure $P_{EXH}$ near the UEGO sensor 13 (i.e. downstream of the anti-particulate filter) (knowing the exhaust pressure $P_{EXH}$ downstream the anti-particulate filter is important in systems with "long-route EGR" which are currently used for Euro 6 Diesel type-approval level). The correct operation of the upstream-downstream filter differential pressure sensor can be diagnosed, or the upstream-downstream differential pressure sensor can even be eliminated if there are two UEGO sensors 13 at the two terminals of the anti-particulate filter used for estimating the exhaust pressure $P_{EXH}$ near both UEGO sensors 13.

**Claims**

1.    An updating method of a pressure law (P-LAW) which provides the exhaust pressure ($P_{EXH}$) as a function of the exhaust gas flow rate ($Q_{EXH}$) in an internal combustion engine (1); the updating method comprises the steps of:

    measuring a first current intensity ($Ip_1$) of a UEGO sensor (13), which is arranged along an exhaust duct (10), under conditions of pure air and at an exhaust pressure ($P_{EXH}$) equal to a reference pressure;
    measuring a second current intensity ($Ip_2$) of the UEGO sensor (13) under conditions of pure air and at an exhaust pressure ($P_{EXH}$) different from the reference pressure;
    estimating the exhaust gas flow rate ($Q_{EXH}$) at the moment of measuring the second current intensity ($Ip_2$) of the UEGO sensor (13);
    determining a current difference ($\Delta Ip$) by performing a subtraction between the second current intensity ($Ip_2$) of the UEGO sensor (13) and the first current intensity ($Ip_1$) of the UEGO sensor (13);
    determining an exhaust pressure ($P_{EXH}$) corresponding to the current difference ($\Delta Ip_1$) by using a constructive feature (C-LAW) of the UEGO sensor (13), which links the exhaust pressure ($P_{EXH}$) to the current difference ($\Delta Ip$); and
    using the exhaust pressure ($P_{EXH}$) corresponding to the current difference ($\Delta Ip$) and the exhaust gas flow rate ($Q_{EXH}$) at the moment of measuring the second current intensity ($Ip_2$) of the UEGO sensor (13) in order to update the pressure law (P-LAW).

2.    An updating method according to claim 1, wherein the estimate of the exhaust gas flow rate ($Q_{EXH}$) comprises the further steps of:

    estimating the flow rate of the air taken in ($Q_{INT}$) by the cylinders (3) of the internal combustion engine (1) ;
    estimating the flow rate of the fuel ($Q_{FUEL}$) injected; and
    calculating the exhaust gas flow rate ($Q_{EXH}$) by adding the flow rate of the air taken in ($Q_{INT}$) by the cylinders (3) to the flow rate of the fuel ($Q_{FUEL}$) injected multiplied by a scale factor.

3.    An updating method according to claim 1 or 2, wherein the pressure law (P-LAW) is a polynomial law.

4.    An updating method according to claim 3, wherein the pressure law (P-LAW) is expressed by the following polynomial law:

$$P_{EXH} = a \cdot M_{EXH}^2 + b \cdot M_{EXH} + c$$

$P_{EXH}$ exhaust pressure;
$M_{EXH}$ exhaust gas flow rate;
a,b,c fixed numeric coefficients of the polynomial function.

5. An estimate method according to any of the claims from 1 to 4, wherein the reference pressure is the atmospheric pressure.

6. An estimate method according to any of the claims from 1 to 5 and comprising the further step of assuming that the UEGO sensor (13) is at an exhaust pressure ($P_{EXH}$) equal to the reference pressure, when the internal combustion engine (1) presents a number of revolutions per minute which is close to the minimum number of revolutions per minute.

7. An estimate method according to any of the claims from 1 to 6 and comprising the further step of assuming that the UEGO sensor (13) is under conditions of pure air, when the internal combustion engine (1) remains in cut-off for a certain time interval.

8. An estimate method according to any of the claims from 1 to 7 and comprising the further step of assuming that the UEGO sensor (13) is at an exhaust pressure ($P_{EXH}$) equal to the reference pressure and under conditions of pure air, when the internal combustion engine (1) is turned off.

9. An estimate method according to any of the claims from 1 to 8 and comprising the further steps of:

determining an exhaust pressure deviation ($\Delta P_{EXH}$) by performing the difference between the exhaust pressure ($P_{EXH}$) corresponding to the current difference ($\Delta \dot{I}p$) and the exhaust pressure ($P_{EXH}$) provided by the pressure law (P-LAW) in correspondence to the exhaust gas flow rate ($Q_{EXH}$) at the moment of measuring the second current intensity ($Ip_2$) of the UEGO sensor (13); and
updating the pressure law (P-LAW) only if the absolute value of the exhaust pressure deviation ($\Delta P_{EXH}$) is higher than a predetermined threshold.

10. An estimate method according to any of the claims from 1 to 9, wherein the second current intensity ($Ip_2$) of the UEGO sensor (13) is measured under conditions of pure air and at an exhaust pressure ($P_{EXH}$) higher than the reference pressure.

11. An updating method according to claim 10 and comprising the further step of assuming the UEGO sensor (13) is at an exhaust pressure ($P_{EXH}$) higher than the reference pressure, when the difference between the current number of revolutions per minutes and the minimum number of revolutions per minute is higher than a predetermined threshold value.

**Patentansprüche**

1. Verfahren zum Aktualisieren eines Druckgesetzes (P-LAW), das den Abgasdruck ($P_{EXH}$) in Abhängigkeit vom Abgasstrom ($Q_{EXH}$) in einer Brennkraftmaschine (1) liefert; das Aktualisierungsverfahren beinhaltet folgende Schritte:

Messen einer ersten Stromstärke ($Ip_1$) eines UEGO-Sensors (13), der entlang einer Abgasleitung (10) angeordnet ist, unter Reinluftbedingungen und bei einem Abgasdruck ($P_{EXH}$),
der gleich einem Referenzdruck ist;
Messen einer zweiten Stromstärke ($Ip_2$) des UEGO-Sensors (13) unter Reinluftbedingungen und bei einem Abgasdruck ($P_{EXH}$), der sich von dem Referenzdruck unterscheidet;
überschlägiges Ermitteln des Abgasstroms ($Q_{EXH}$) im Moment des Messens der zweiten Stromstärke ($Ip_2$) des UEGO-Sensors (13);
Bestimmen einer Stromdifferenz ($\Delta Ip$) durch Durchführen einer Subtraktion zwischen der zweiten Stromstärke ($Ip_2$) des UEGO-Sensors (13) und der ersten Stromstärke ($Ip_1$) des UEGO-Sensors (13);
Bestimmen eines Abgasdrucks ($P_{EXH}$) entsprechend der Stromdifferenz ($\Delta Ip$) durch Anwenden eines konstruk-

tiven Merkmals (C-LAW) des UEGO-Sensors (13), das den Abgasdruck ($P_{EXH}$) mit der Stromdifferenz ($\Delta Ip$) verknüpft;
und
Anwenden des Abgasdrucks ($P_{EXH}$) entsprechend der Stromdifferenz ($\Delta Ip$) und des Abgasstroms ($Q_{EXH}$) im Moment des Messens der zweiten Stromstärke ($Ip_2$) des UEGO-Sensors (13), um das Druckgesetz (P-LAW) zu aktualisieren.

2. Aktualisierungsverfahren nach Anspruch 1, wobei das überschlägige Ermitteln des Abgasstroms ($Q_{EXH}$) folgende weitere Schritte beinhaltet:

   überschlägiges Ermitteln des Stroms der von den Zylindern (3) der Brennkraftmaschine (1) angesaugten Luft ($Q_{INT}$) ;
   überschlägiges Ermitteln des Stroms des eingespritzten Kraftstoffs ($Q_{FUEL}$) ; und
   Berechnen des Abgasstroms ($Q_{EXH}$) durch Addieren des Stroms der von den Zylindern (3) angesaugten Luft ($Q_{INT}$) zu dem Strom des eingespritzten Kraftstoffs ($Q_{FUEL}$), multipliziert mit einem Skalenfaktor.

3. Aktualisierungsverfahren nach Anspruch 1 oder 2, wobei das Druckgesetz (P-LAW) ein polynomisches Gesetz ist.

4. Aktualisierungsverfahren nach Anspruch 3, wobei das Druckgesetz (P-LAW) durch folgendes polynomisches Gesetz ausgedrückt wird:

$$P_{EXH} = a \cdot M_{EXH}^2 + b \cdot M_{EXH} + c$$

   $P_{EXH}$ Abgasdruck;
   $M_{EXH}$ Abgasstrom;
   a,b,cfeste numerische Koeffizienten der Polynomfunktion.

5. Überschlagsverfahren nach einem der Ansprüche 1 bis 4, wobei der Referenzdruck der atmosphärische Druck ist.

6. Überschlagsverfahren nach einem der Ansprüche 1 bis 5 und mit dem weiteren Schritt, bei dem angenommen wird, dass am UEGO-Sensor (13) ein Abgasdruck ($P_{EXH}$) gleich dem Referenzdruck herrscht, wenn die Brennkraftmaschine (1) eine Zahl der Umdrehungen pro Minute zeigt, die nahe der Mindestzahl der Umdrehungen pro Minute ist.

7. Überschlagsverfahren nach einem der Ansprüche 1 bis 6 und mit dem weiteren Schritt, bei dem angenommen wird, dass am UEGO-Sensor (13) Reinluftbedingungen herrschen, wenn die Brennkraftmaschine (1) für einen bestimmten Zeitabstand im Absteuerzustand bleibt.

8. Überschlagsverfahren nach einem der Ansprüche 1 bis 7 und mit dem weiteren Schritt, bei dem angenommen wird, dass am UEGO-Sensor (13) ein Abgasdruck ($P_{EXH}$) gleich dem Referenzdruck und Reinluftbedingungen herrschen, wenn die Brennkraftmaschine (1) ausgeschaltet wird.

9. Überschlagsverfahren nach einem der Ansprüche 1 bis 8 und mit folgenden weiteren Schritten:

   Bestimmen einer Abgasdruckabweichung ($\Delta P_{EXH}$) durch Ermitteln der Differenz zwischen dem Abgasdruck ($P_{EXH}$) entsprechend der Stromdifferenz ($\Delta Ip$) und dem Abgasdruck ($P_{EXH}$), geliefert vom Druckgesetz (P-LAW), in Entsprechung zum Abgasstrom ($Q_{EXH}$) im Moment des Messens der zweiten Stromstärke ($Ip_2$) des UEGO-Sensors (13); und
   Aktualisieren des Druckgesetzes (P-LAW) nur dann, wenn der absolute Wert der Abgasdruckabweichung ($\Delta P_{EXH}$) höher als ein vorgegebener Schwellenwert ist.

10. Überschlagsverfahren nach einem der Ansprüche 1 bis 9, wobei die zweite Stromstärke ($Ip_2$) des UEGO-Sensors (13) unter Reinluftbedingungen und bei einem Abgasdruck ($P_{EXH}$), der höher als der Referenzdruck ist, gemessen wird.

11. Aktualisierungsverfahren nach Anspruch 10 und mit dem weiteren Schritt, bei dem angenommen wird, dass am UEGO-Sensor (13) ein Abgasdruck ($P_{EXH}$) herrscht, der höher als der Referenzdruck ist, wenn die Differenz zwischen der aktuellen Zahl der Umdrehungen pro Minute und der Mindestzahl der Umdrehungen pro Minute höher als ein vorgegebener Schwellenwert ist.

## Revendications

1. Procédé de mise à jour d'une loi de pression (P-LAW) qui donne la pression d'échappement ($P_{EXH}$) en fonction du débit de gaz d'échappement ($Q_{EXH}$) dans un moteur à combustion interne (1), le procédé de mise à jour comprenant les étapes consistant à :

   mesurer une première intensité de courant ($Ip_1$) d'un capteur UEGO (12) qui est monté le long d'un conduit d'échappement (10), dans des conditions d'air pur et à une pression d'échappement ($P_{EXH}$) égale à une pression de référence ;
   mesurer une seconde intensité de courant ($Ip_2$) du capteur UEGO (13) dans des conditions d'air pur et à une pression d'échappement ($P_{EXH}$) différente de la pression de référence ;
   estimer le débit de gaz d'échappement ($Q_{EXH}$) au moment de la mesure de la seconde intensité de courant ($Ip_2$) du capteur UEGO (13) ;
   déterminer une différence de courant ($\Delta Ip$) en effectuant une soustraction entre la seconde intensité de courant ($Ip_2$) du capteur UEGO (13) et la première intensité de courant ($Ip_1$) du capteur UEGO (13) ;
   déterminer une pression d'échappement ($P_{EXH}$) correspondant à la différence de courant ($\Delta Ip$) en appliquant une caractéristique de construction (C-LAW) du capteur UEGO (13), qui lie la pression d'échappement ($P_{EXH}$) à la différence de courant ($\Delta Ip$) ; et
   utiliser la pression d'échappement ($P_{EXH}$) correspondant à la différence de courant ($\Delta Ip$) et le débit des gaz d'échappement ($Q_{EXH}$) au moment de la mesure de la seconde intensité de courant ($Ip_2$) du capteur UEGO (13) pour mettre la loi de pression (P-LAW) à jour.

2. Procédé de mise à jour selon la revendication 1, selon lequel l'estimation du débit de gaz d'échappement ($Q_{EXH}$) comprend les étapes supplémentaires consistant à
   estimer le débit de l'air aspiré ($Q_{INT}$) par les cylindres (3) du moteur à combustion interne (1) ;
   estimer le débit du carburant ($Q_{fuel}$) injecté ; et
   calculer le débit des gaz d'échappement ($G_{EXH}$) en ajoutant le débit de l'air aspiré ($Q_{INT}$) par les cylindres (3) au débit de carburant ($Q_{fuel}$) injecté multiplié par un facteur d'échelle.

3. Procédé de mise à jour selon la revendication 1 ou 2, selon lequel la loi de pression (P-LAW) est une loi polynomiale.

4. Procédé de mise à jour selon la revendication 3, selon lequel la loi de pression (P-LAW) est exprimée par la loi polynomiale suivante :

$$P_{EXH} = a.M_{EXH}^2 + b.M_{EXH} + c$$

   $P_{EXH}$ pression d'échappement ;
   $M_{EXH}$ débit de gaz d'échappement ;
   a,b,c coefficients numériques fixes de la fonction polynomiale.

5. Procédé d'estimation selon une des revendications 1 à 4, dans lequel la pression de référence est la pression atmosphérique.

6. Procédé d'estimation selon une quelconque des revendications 1 à 5, et comprenant l'étape supplémentaire consistant à supposer que le capteur UEGO (13) est à une pression d'échappement ($P_{EXH}$) égale à la pression de référence lorsque le moteur à combustion interne (1) a un nombre de tours par minute qui est proche du nombre minimum de tours par minute.

7. Procédé d'estimation selon une quelconque des revendications 1 à 6, et comprenant l'étape supplémentaire consistant à supposer que le capteur UEGO (13) est dans des conditions d'air pur lorsque le moteur à combustion interne (1) reste coupé pendant un certain intervalle de temps.

8. Procédé d'estimation selon une quelconque des revendications 1 à 7 et comprenant l'étape supplémentaire consistant à supposer que le capteur UEGO (13) est à une pression d'échappement ($P_{EXH}$) égale à la pression de référence et dans des conditions d'air pur lorsque le moteur à combustion interne (1) est arrêté.

9. Procédé d'estimation selon une quelconque des revendications de 1 à 8 et comprenant les étapes supplémentaires consistant à :

   déterminer un écart de pression d'échappement ($\Delta P_{EXH}$) en effectuant la différence entre la pression d'échappement ($P_{EXH}$) correspondant à la différence de courant ($\Delta Ip$) et la pression d'échappement ($P_{EXH}$) donnée par la loi de pression (P-LAW) en fonction du débit de gaz d'échappement ($Q_{EXH}$) au moment de la mesure de la seconde intensité de courant ($Ip_2$) du capteur UEGO (13) ; et
   mettre la loi de pression (P-LAW) à jour uniquement si la valeur absolue de l'écart de pression d'échappement ($\Delta P_{EXH}$) est supérieur à un seuil prédéterminé.

10. Procédé d'estimation selon une quelconque des revendications 1 à 9, dans lequel la seconde intensité de courant ($Ip_2$) du capteur UEGO (13) est mesurée dans des conditions d'air pur et à une pression d'échappement ($P_{EXH}$) supérieure à la pression de référence.

11. Procédé de mise à jour selon la revendication 10 et comprenant l'étape supplémentaire consistant à supposer que le capteur UEGO (13) est à une pression d'échappement ($P_{EXH}$) supérieure à la pression de référence lorsque la différence entre le nombre actuel de tours par minute et le nombre minimum de tours par minute est supérieure à une valeur seuil prédéterminée.

Fig. 1

Fig. 2

Fig. 3

Fig. 4

Fig. 5